Europäisches Patentamt

European Patent Office

Office européen des brevets

(19)

(11) EP 0 480 555 B1

## (12) EUROPEAN PATENT SPECIFICATION

(45) Date of publication and mention
of the grant of the patent:
**18.09.1996 Bulletin 1996/38**

(51) Int Cl.$^6$: **H04L 12/26**

(21) Application number: **91301204.3**

(22) Date of filing: **14.02.1991**

(54) **Method of ascertaining topology features of a network**

Bestimmungsverfahren für Netztopologyeigenschaften

Méthode pour la détermination des caractéristiques topologiques d'un réseau

(84) Designated Contracting States:
**DE FR GB IT**

(30) Priority: **28.09.1990 EP 90310699**

(43) Date of publication of application:
**15.04.1992 Bulletin 1992/16**

(73) Proprietor: **Hewlett-Packard Company**
**Palo Alto, California 94304 (US)**

(72) Inventor: **Phaal, Peter**
**Bristol (GB)**

(74) Representative: **Squibbs, Robert Francis et al**
**Intellectual Property Section**
**Building 2**
**Hewlett-Packard Limited**
**Filton Road**
**Stoke Gifford Bristol BS12 6QZ (GB)**

(56) References cited:
**EP-A- 0 265 106**

- **FUTURE GENERATIONS COMPUTER SYSTEMS. vol. 5, no. 4, January 1990, AMSTERDAM NL pages 359 - 363; U. DE CARLINI ET AL: 'THE MONITORING OF INTER- PROCESS COMMUNICATION IN DISTRIBUTED SYSTEMS'**
- **IEEE NETWORK: THE MAGAZINE OF COMPUTER COMMUNICATIONS. vol. 1, no. 3, July 1987, NEW YORK US pages 32 - 39; D.RITTER ET AL: 'A MULTI- PURPOSE, DISTRIBUTED LAN TRAFFIC MONITORING TOOL'**
- **IEEE NETWORK: THE MAGAZINE OF COMPUTER COMMUNICATIONS. vol. 1, no. 3, July 1987, NEW YORK US pages 13 - 19; M. SOHA: 'A DISTRIBUTED APPROACH TO LAN MONITORING USING INTELLIGENT HIGH PERFORMANCE MONITORS'**

## Description

The present invention relates to a method of ascertaining topology features of a network of the type comprising a plurality of sub-networks, spanning devices interconnecting the sub-networks, and stations operative to source and/ or sink traffic to/from the sub-networks, the traffic being in the form of discrete message packets each including source and destination information.

Networks of the aforesaid type are well known, their spanning devices serving to isolate local traffic (that is, traffic sourcing from, and destined for, stations on the same sub-network) to the sub-networked concerned, at least to some degree. Examples of such networks are:

(a) - bridged Ethernets where stations, identified by Ethernet addresses, are connected to sub-networks (also termed logical segments) which are interconnected by spanning devices in the form of bridges operating at level 2 of the seven-layer OSI Reference Model; and

(b) - Internet networks where stations identified by "ip" addresses are connected to "ip" sub-networks which are interconnected by spanning devices in the form of routers or gateways operating at level 3 of the seven-payer OSI Reference Model.

Monitoring systems for networks made up of a number of sub-networks are known in the art (see for example, IEEE Network: The Magazine of Computer Communications vol. 1, No. 3, July 1987, New York, US, pages 32 to 39; D Ritter et al: "A Multi-Purpose, Distributed LAN Traffic Monitoring Tool").

Knowledge of topological features of such networks (for example, the connection arrangement of stations to sub-networks and the interconnection of sub-networks by spanning devices) is of importance in monitoring and optimising the performance of the network and in planning for its expansion to cope with increased demand. However, such knowledge is frequently difficult to ascertain, particularly with large networks. For example, keeping up-to-date plans of the network by recording every change made, is not only time-consuming but is, in reality, a virtually impossible task to carry through with complete accuracy; in addition, such plans can only indicate the intended connection state of the network and cannot take account of the failure of network elements such as the simple disconnection of a station from its sub-network. Physical inspection of a network to ascertain its topology is also very difficult since much of the network may be hidden beneath flooring or located at remote sites.

In the case of a network made up of a single sub-network, it is possible to ascertain which stations are connected to the subnetwork simply by monitoring the traffic on the sub-network; all stations sourcing traffic are obviously connected to the sub-network as there is no other source of traffic outside the sub-network. However, where the network comprises several sub-networks interconnected by spanning devices, it is no longer possible to make such simple deductions as traffic appearing on any one particular sub-network might have originated on another sub-network.

It is an object of the present invention to provide a relatively simple method for ascertaining topology features of a network that includes a plurality of sub-networks.

According to the present invention, there is provided a method of ascertaining topology features of a network of the aforesaid type, characterised in that said method comprises the steps of:

- monitoring the traffic on at least some of said sub-networks to derive data concerning at least the origins of the traffic so monitored,

- determining measures of the amount of traffic originating from a particular source, or a subset of this traffic, as seen on different parts of the network, said particular source comprising at least one station, and

- comparing the said measures to determine which of said parts of the network carries the most traffic of interest from said particular source and thereby determine selected topology features of the network regarding said particular source.

The monitoring step utilises a monitoring device on each sub-network concerned. Such a device may be a standalone device or part of a spanning device or station connected to the sub-network. Each monitoring device is preferably operative to collect both source and destination information in respect of traffic on the sub-network and this information is then used to generate a partial traffic matrix, that is, a correlation between source stations and destination stations for the traffic seen on the sub-network concerned. However, it should be understood that the determining and comparing steps, depending on what topological features are to be ascertained, may not require all the data contained in such partial traffic matrices and the present invention should therefore not be taken as limited to the provision of the necessary data in the form of partial traffic matrices.

The source information in each message packet will generally only provide an indication of the originating station, although in certain networks, sub-network identification is also carried in the source information. In the former case, the method of the present invention can be used to ascertain to which sub-network a selected station is connected;

this is achieved by having said determining step determine the amount of traffic originating from said selected station that is carried by each said sub-network, the said comparing step then determining the sub-network carrying the most traffic from said selected station, this sub-network being taken as the one to which said selected station is connected. This process can then be repeated for each station to build up a complete picture of the connection of stations to sub-networks.

The method of the present invention can also be used to ascertain whether a first sub-network is directly connected by a spanning device to a second sub-network; this is done by comparing, for some or all of the components of traffic originating on the first sub-network, the amounts of that traffic seen on the second sub-network with the amounts of that traffic seen on all the other sub-networks (that is, other than the first and second sub-networks). In particular, three different methods for testing for a spanning device are provided.

In the first of the methods for testing for a spanning device between first and second sub-networks:

- said method includes the step of providing association information enabling the said source information included in a message packet to be used to identify a message packet as having originated from said first sub-network;
- said monitoring step involves monitoring the traffic on said second sub-network and on each sub-network of the group of sub-networks made up of all said sub-networks other than said first and second sub-networks,
- said determining step involves determining, with the use of said association information, measures of the amounts of traffic sourcing from said first sub-network that are carried by said second sub-network and the sub-networks of said group of sub-networks; and
- said comparing step is operative to use said measures to compare the said amounts of traffic sourcing from said first sub-network, that are respectively carried by said second sub-network and by the sub-networks of said group taken together, the comparing step determining that a spanning device directly connects the first sub-network to the second when the larger of these amounts of traffic is carried by said second sub-network.

In the second of the methods for testing for a spanning device between first and second sub-networks:

- said method includes the step of providing association information enabling:

  (a) the said source information included in a message packet to be used to identify a message packet as having originated from said first sub-network; and
  (b) the said destination information included in a message packet to be used to identify a message packet as having a destination other than said second sub-network;

- said monitoring step involves monitoring the traffic on said second sub-network and on each sub-network of the group of sub-networks made up of all said sub-networks other than said first and second sub-networks,
- said determining step involves determining, with the use of said association information, measures of the amounts of traffic sourcing from said first sub-network and having a destination other than on said second sub-network, that are carried by said second sub-network and the sub-networks of said group of sub-networks; and
- said comparing step is operative to use said measures to compare the said amounts of traffic sourcing from said first sub-network and having a destination other than on said second sub-network, that are respectively carried by said second sub-network and by the sub-networks of said group taken together, the comparing step determining that a spanning device directly connects the first sub-network to the second when the larger of these amounts of traffic is carried by said second sub-network.

The third one of the methods for testing for a spanning device between first and second sub-networks is applicable where the spanning devices used in the network do not act perfectly to block messages packets with a destination on a connected sub-network from passing through the spanning device from that sub-network to another. In this third method for testing for a spanning device:

- said method includes the step of providing association information enabling:

  (a) the said source information included in a message packet to be used to identify a message packet as having originated from said first sub-network; and
  (b) the said destination information included in a message packet to be used to identify a message packet as having a destination on said first sub-network;

- said monitoring step involves monitoring the traffic on said second sub-network and on each sub-network of the group of sub-networks made up of all said sub-networks other than said first and second sub-networks,

**EP 0 480 555 B1**

- said determining step involves determining, with the use of said association information, measures of the amounts of traffic sourcing from said first sub-network and having a destination on said first sub-network, that are carried by said second sub-network and the sub-networks of said group of sub-networks; and

- said comparing step is operative to use said measures to compare the said amounts of traffic sourcing from said first sub-network and having a destination on said first sub-network, that are respectively carried by said second sub-network and by the sub-networks of said group taken together, the comparing step determining that a spanning device directly connects the first sub-network to the second when the larger of these amounts of traffic is carried by said second sub-network.

All three of the foregoing methods of testing for a spanning device are conservative in operation in that they may not find a spanning device which is present, but they are also safe in that they will not find a spanning device which is not present.

The association information required by all three of the methods for testing for a spanning device, associates stations with sub-networks. Where the source information in each message packet inherently provides an indication of the sourcing sub-network, then the association information is simply that required to interpret the source information correctly according to some predetermined scheme; in other cases, the ad hoc association between stations and sub-networks must first be determined (for example, in accordance with the above-recited method of the invention) and recorded as said association information.

In all three of the methods for testing for a spanning device, the derivation in the determining step of the relevant amount of traffic sourcing from said first sub-network that is carried by the sub-networks of said group taken together, can be effected in several different ways. For example, the derivation can be effected by adding together the corresponding traffic amounts for each sub-network of said group without regard to any duplication that may occur as a result of the same message packet being monitored on more than one sub-network of the group. Alternatively the derivation can be effected by:

- determining for each sub-network of said group, the components of the sub-network traffic sourcing from said first sub-network, that are destined for that sub-network and for said second sub-network, and

- adding together the sub-network traffic components so determined for all the sub-networks of said group.

Any of the three aforesaid methods of testing for a spanning device can be effected in relation to traffic sourcing from said first sub-network either without regard to originating station on the sub-network (that is, by taking all stations together), or by taking each station separately and applying the test to traffic sourcing from that station on the first sub-network.

Furthermore, where bi-directional spanning devices are used (that is, they permit traffic flow in both directions between the sub-networks they interconnect) each of the tests for a spanning device between first and second sub-networks can be carried out not only for traffic sourcing from the first network but also for traffic sourcing from the other said sub-network.

It is, of course, possible to use all three methods of testing for a spanning device, in succession to test for a spanning device between the same pair of sub-networks (testing being stopped when and if a positive result is obtained). By applying the aforesaid methods of testing for a spanning device to each pairing of sub-networks of the network or the portion thereof under consideration, it is possible to determine which of the sub-networks are interconnected by spanning devices and thereby to build up a full picture of the network topology.

In a preferred implementation of the invention, traffic information on each sub-network is collected locally by a sampling monitoring device which transmits sampled data back to a central processing station. The processing station derives partial traffic matrices for all the monitored sub-networks and then processes the data contained in the traffic matrices in accordance with the methods of the invention. In carrying out this processing, the processing station effects comparisons between traffic flows by using hypothesis testing in view of the sampled nature of the data provided to it.

A suitable sampling monitoring device for use in implementing the method of the present invention is described and claimed in our co-pending European Patent Application No.90310699.5 filed 28th September 1990.

The partial traffic matrices used by the processing station for deriving topology features of the network can, of course, be obtained in other ways such as, for example, by monitoring devices which derive and store these partial traffic matrices themselves, the partial traffic matrices then being collected and passed to the processing station.

A method, according to the invention, of ascertaining topology features of a network will now be described by way of non-limiting example with reference to the accompanying diagrammatic drawings, in which:

Figure 1     is an overall diagram of a network to which a processing station and a number of sampling monitoring devices have been connected to form a network monitoring system implementing the method of the invention;

4

Figure 2    is a diagram illustrating the general form of a data packet transmitted over the Figure 1 network;

Figure 3    is a block diagram of a sampling monitoring device of Figure 1;

Figure 4    is a flow chart illustrating the main interrupt service routine run by a controlling microprocessor of the Figure 3 device;

Figure 5    is a diagram illustrating the main data structures utilised by the processing station of Figure 1 in processing data from the sampling monitoring devices;

Figure 6    shows an example partial traffic matrix for a sub-network of the Figure 1 network;

Figure 7    is a flow chart illustrating a main program run by the processing station;

Figure 8    is a flow chart illustrating an interrupt service routine which is run by the processing station, upon receipt of data from a sampling monitoring device, in order to build up partial traffic matrices;

Figure 9    is a flow chart illustrating a "station-allocation" routine called by the Figure 7 program to determine the association between stations and sub-networks of the Figure 1 network;

Figure 10 A  is a diagram illustrating possible traffic flows in the network between two sub-networks Y and X when they are connected by a bridge;

Figure 10B  is a diagram similar to Figure 10A but for the case when no bridge inter-connects sub-networks Y and X.

Figure 11   is a diagram illustrating possible leakage traffic flows from sub-network Y when no bridge inter-connects sub-networks Y and X.

Figure 12   is a flow chart illustrating a "tests for bridges" routine called by the Figure 7 program to determine which pairs of sub-networks are inter-connected by bridges; and

Figure 13   is a flow chart illustrating a "first test for a bridge" sub-routine called by the Figure 12 routine.

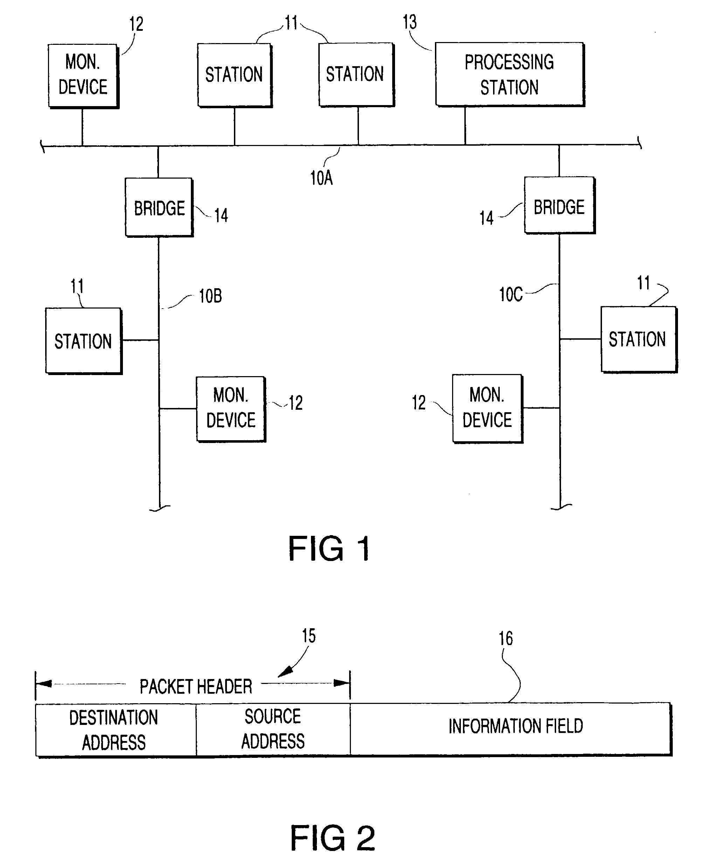

Figure 1 illustrates a typical local area network in which a plurality of stations 11, 12, and 13 are interconnected via cable segments 10A, 10B, and 10C. The network is divided into three sub-networks by bridges (spanning devices) 14 that connect respective ones of the cable segments 10B, 10C to the cable segment 10A. As is well known in the art, the bridges serve to filter traffic passing between the network segments, such that messages originating from a particular segment and destined for a station on the same segment (local traffic) are not passed through the bridge or bridges 14 to the other segments whereas messages originating in one segment and intended for another one (non-local traffic) are allowed across the bridge. The operation for such bridges is generally imperfect and some local traffic will usually 'leak' through the bridges.

In the illustrated local area network, messages between the stations 11, 12 and 13 are transmitted in the form of packets that are broadcast over the network. Typically a packet will have the form illustrated in Figure 2 with a packet header 15 containing a source address (the address of the station sending the packet) and a destination address (the address of the station intended to receive the packet), and an information field 16 containing the data to be passed to the receiving station and normally including error checking codes. Depending on the particular packet format being used, other fields may also be present; thus, for example, there may be a CRC (cycle redundancy check) field covering both the packet header and information field.

The Figure 1 network may, for example, be an Ethernet network well known to persons skilled in the art.

The network of Figure 1 is arranged to be monitored by a network monitoring system comprising a plurality of monitoring devices (stations 12) and a central processing station 13. Each of the monitoring devices is associated with a respective one of the sub-networks of the network. As will become clear below, each monitoring device is operative to randomly sample the packets on its associated sub-network and transmit data on the sampled packets back to the processing station 13 for processing and analysis.

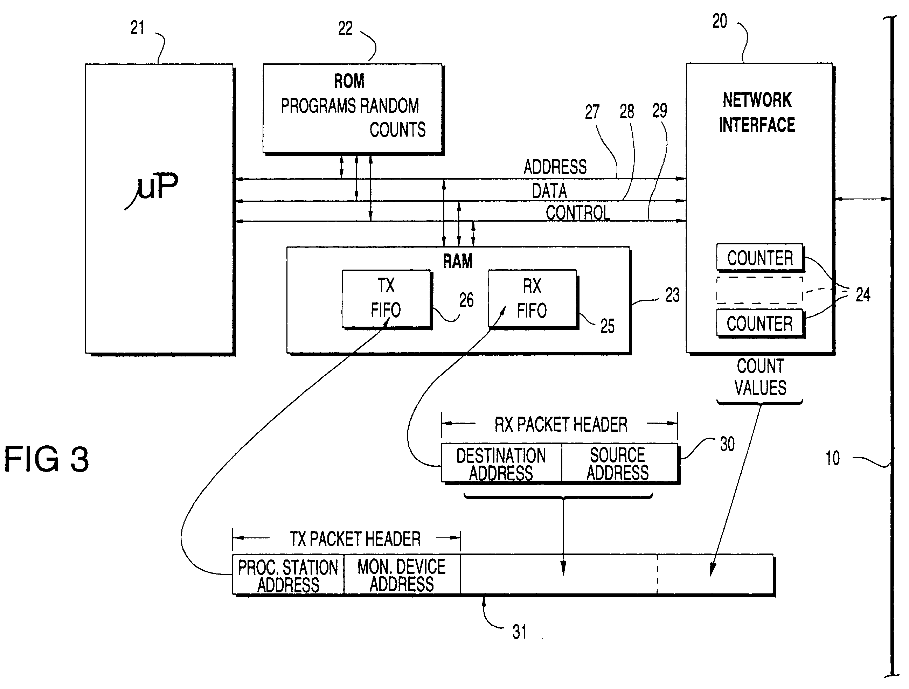

The form of each monitoring device is illustrated in Figure 3. The device comprises a network interface 20, a microprocessor 21, and ROM (non-volatile, pre-programmed memory) and RAM (re-writable memory) units 22 and 23. These units 20 to 23 are all interconnected via address, data and control buses 27, 28 and 29. The network interface 20 is operative to carry out all the low level functions necessary to interface the monitoring device of Figure 3 to the network cable 10 and to pass received packets to a receive queue, in the form of a FIFO (First In First Out) buffer 25 in RAM 23. The network interface is further operative to transmit packets held in a transmit queue, formed by a FIFO buffer 26, in RAM 23. The network interface 20 thus constitutes packet receive means and packet transmit means for the monitoring device. In the present example, the network interface 20 is arranged to receive all packets regardless of their destination address contained in the packet header. Furthermore, the network interface 20 is operative to pass only the header portion 30 of each received packet to the receive FIFO buffer 25.

The network interface 20 is arranged to operate in coordination with the microprocessor controller 21 and, in particular, informs the microprocessor 21 each time a packet header is inserted into the receive FIFO buffer 25, by means of a suitable interrupt control signal.

The network interface 20 also contains various counters 24 which hold a number of counts including the total number of packets received, the number of packets received which according to their CRC field are in error, the number of packets received below the minimum accepted length (RUNT packets), and the number of packets received above the maximum accepted length (JABBER).

Implementations of the network interface 20 for particular network protocols are well known in the art. Thus, for example, for an Ethernet network, the network interface 20 may be constituted by Intel Corporation chips 82502, 82501, and 82586; in this case an appropriate microprocessor constituting the microprocessor 21 is the Intel processor 80186.

The ROM 22 holds the programs run by the microprocessor 21 and also a table of random count values predetermined according to an exponential distribution.

The processor 21 is operative to run a background program in which it does nothing (ie an idling program). The main working program for the processor 21 is an interrupt service routine which is called each time the network interface 20 generates a processor interrupt to tell the processor that it has stored a new packet header in the receive FIFO 25. The interrupt service routine, which will be described in more detail below, operates to randomly select a received packet header and form it into a collected-data packet together with the current count values of the counters 24; the random selection of received packet headers is effected by utilizing the predetermined random counts stored in ROM 22. The collected-data packet so formed is put into the transmit queue FIFO 26 and, in due course, is transmitted by the network interface 20 back to the processing station 13. The header of each collected-data packet contains as its source address the address of the monitoring device concerned while the destination address is that of the processing station (alternatively, a multi-cast address can be used to which the processing station is set to listen).

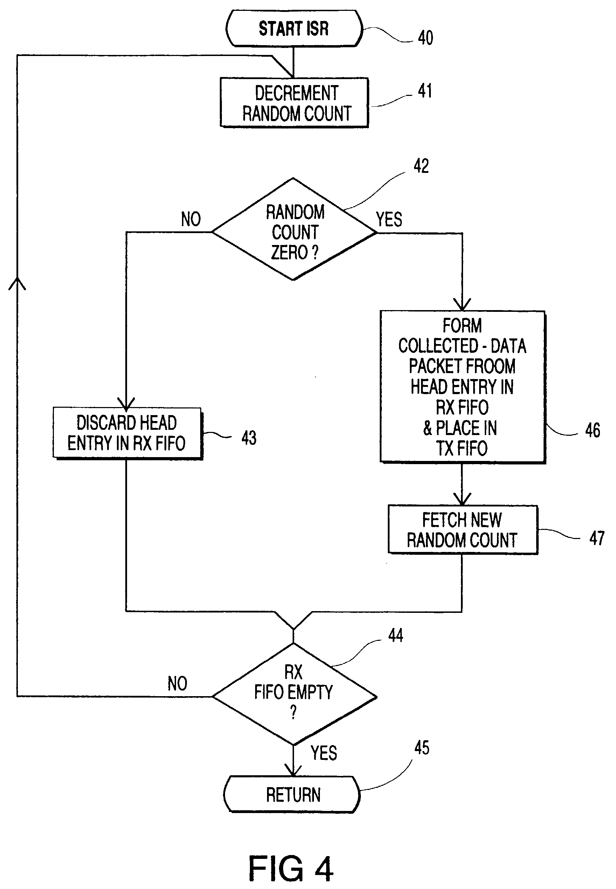

A more detailed description of the operation of the monitoring device will now be given with reference to Figure 4 which is a flow chart of the interrupt service routine run by the microprocessor 21. The microprocessor 21 will be taken to be in a state in which it is running its background (idling) program and in which it has one of the random count values held in an internal register (the fetching of the first count value upon switch-on of the monitoring device would be part of an initialization routine). It will also be assumed that the receive and transmit FIFO buffers 25 and 26 are empty.

On receiving a packet over the network cable 10, the network interface 20 passes the packet header to the receive FIFO buffer 25, updates its counters 24 and generates an interrupt signal for the microprocessor 21. On receipt of this interrupt, the microprocessor 21 executes the interrupt service routine illustrated in Figure 4. The first step 40 of this routine carries out the normal house-keeping tasks associated with such routines including saving the volatile environment parameters of the background program and masking further interrupts.

Next, the microprocessor decrements the random count value held in its internal register (step 41) and then checks the remaining value to see if this has been reduced to zero (step 42).

If the count value is still greater than zero, the microprocessor 21 discards the head entry in the receive FIFO buffer 25 (step 43).

Thereafter, the microprocessor must check the receive FIFO buffer 25 to see if any further packet headers have been entered into the buffer by the network interface 20 during the preceding steps of the interrupt service routine (step 44). Generally this will not be the case and the microprocessor will then exit its interrupt service routine and restore its background environment and unmask its interrupts (step 45). However, in the event that the receive FIFO buffer 25 contains a further packet header, the interrupt service routine will pass from step 44 back to step 41.

If during the test (step 42) carried out on the count value held in its internal register, the microprocessor 21 finds that this count value has been reduced to zero, the interrupt service routine will proceed to generate a collected-data packet 31 in respect of the packet header at the top of the receive FIFO buffer 25 (step 46). This collected-data packet 31 is assembled in the transmit FIFO buffer 26 from the received packet header 30, the count values from the counter 24, the address of the monitoring device (source address for the collected-data packet) and the address of the processing station (destination address for the collected-data packet header). After the collected-data packet has been assembled, the microprocessor 21 flags the network interface 20 to indicate that there is a packet ready for transmission. (The network interface 20 will transmit the packet as and when it is able and cancel the flag set by the microprocessor 21 once this has been done).

After completion of step 46 of the interrupt service routine, the microprocessor fetches a new random count from ROM 22 and stores this new random count in its internal register (step 47). The microprocessor then proceeds to step 44 and running of the interrupt service routine proceeds as previously described.

The size of the receive and transmit FIFO buffers 25 and 26 can be quite small, for example, sufficient to hold only two or three entries. This is possible with respect to the receive buffer 25 because in general the interval between packets received by the network interface 20 will be sufficient for the microprocessor 21 to run its interrupt service routine and clear the top entry from the receive buffer; in any event, the occasional overflowing of the receive buffer 25 is not of major consequence since the missing out of a packet will generally have minimal effect on the statistical measurements being conducted by the network monitoring system. This equally applies to the transmit buffer 26 where an overflow is even less likely to occur as its entries are only in respect of the randomly selected ones of the received packets.

The above-described implementation of the monitoring device does mean that the count values included in a collected-data packet from the counter 24 may not be the count values current at the time that the relevant packet was actually received by the network interface (this is because of the possible delay in actually processing the packet header). However, again, any discrepancy in this respect will be minor and will have minimal effect on the validity of the statistically determined results produced by the network monitoring system. Of course, it would be possible to design circuitry which associated the count values present in counters 24 with the header of each received packet; however, the added circuit complexity needed to do this is generally not justified.

The data structures used to implement the receive and transmit FIFO buffers 25 and 26 in RAM 23 will be apparent to a person skilled in the art and will therefore not be described herein. Furthermore, it will be appreciated that although in the Figure 3 embodiment the random selection of incoming packets has been effected by storing predetermined random numbers in ROM 22, these random numbers could alternatively be generated as and when required by the processor 21 (although this is not preferred as it places extra processor requirements on the microprocessor). Typically, the random numbers are such as to give an average skip between selected packets of ninety nine; other values may be more appropriate depending on traffic density, sampling period and acceptable statistical error level. The random selection of packets could be effected on a time basis rather than on the number of packets received.

The collected-data packets sent out by the monitoring devices 12 over the network are all received by the processing station 13 which stores these packets and carries out subsequent processing and analysis.

The processing station 13 is, for example, constituted by a standard workstation interfacing with the network through a network interface (not shown) similar to the interface 20 of the Figure 3 monitoring device 12. Such a workstation will be provided in standard manner with RAM memory for storing working data and program segments, ROM memory for permanent storage of programs, a processor for processing data held in the RAM memory in accordance with the programs, and various input/output devices; none of these elements are illustrated or described herein as they are all standard and well known to persons skilled in the art.

The processing station 13 carries out three main tasks, namely:

(1) - generation of traffic matrices for each sub-network on the basis of the collected-data packets received;
(2) - the association of stations 11 with the various sub-networks using the sub-network traffic matrices; and
(3) - testing for the presence of bridge between all pairs of sub-networks by using the sub-network traffic matrices.

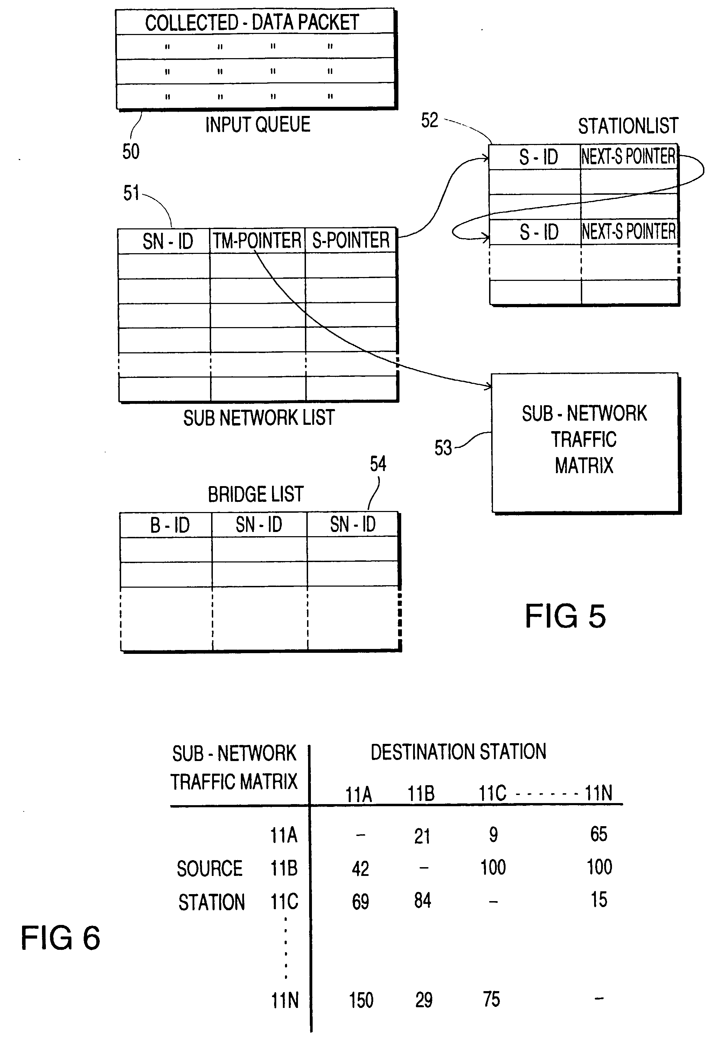

The main data structures employed by the processing station 13 in carrying out these tasks are illustrated in Figure 5, the data structures being created and maintained in the RAM memory of the station 13. The main data structures are:

| | |
|---|---|
| Input-queue 50 | - this is a queue of collected-data packets required by the network interface of the station, each packet being temporarily held in the queue pending processing; |
| Sub-Network List 51 | - this is a list of all the known sub-networks of the network with each sub-network having a respective entry comprising a field storing the sub-network identity SN-ID, a first pointer TM-POINTER, and a second pointer S-POINTER; |
| Station List 52 | - this is a list of all the known stations 11 of the network with each station having a respective entry comprising a field storing the station identity S-ID, and a pointer NEXT-S POINTER. The first station to be associated with any particular sub-network is associated with that sub-network by selling the S-POINTER of the corresponding sub-network entry in the sub-network list 51, to point to the appropriate station entry in the station list 52. The association of further stations with the same sub-network is achieved by using the NEXT-S POINTER of the last preceding station associated with the sub-network to point to the entry of the next station to be associated with the sub-network, thereby building up a linked list of stations. |
| Sub-Network Traffic Matrix 53 | - This is an array formed for each sub-network to hold the partial traffic matrix data for the sub-network. The traffic matrix array relevant to a sub-network is pointed to by the pointer TM-POINTER of the corresponding entry in the sub-network list 51. Figure 6 illustrates a typical partial traffic matrix giving for each source station/ destination station pair, the number of packets carried by the sub-network concerned in a given interval of time (the different stations 11 are here designated 11A, 11B, 11C ...... 11N). |
| Bridge List 54 | - This is a list of all the known bridges of the network with each bridge having a respective entry comprising a field storing the bridge identity B-ID, and a pair of fields for storing the identities (SN-ID) of the sub-networks connected by the bridge. |

Having outlined the main data structures used by the processing station 13, a description will now be given as to how the station carries out its tasks using these structures.

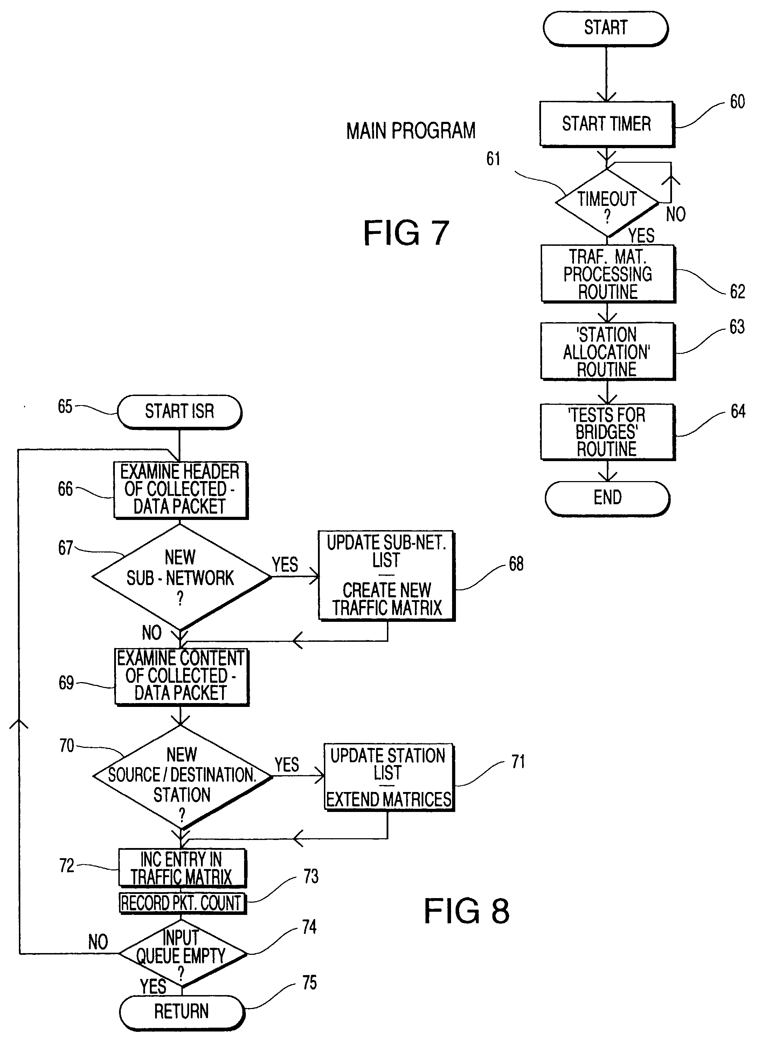

The main program run by the processing station 13 is illustrated in Figure 7. Upon start up of the program, a predetermined time period, e.g. 1 hour, is timed (steps 60,61) during which the main program is idle but collected-data packets are received by the processing station and processed by an interrupt service routine to construct traffic matrices for the sub-networks of the network. After time-out of the predetermined time interval, the main program carries out statistical processing of the traffic matrices (step 62) before proceeding to ascertain topological features of the network, first of all by associating stations with sub-networks using a "station allocation" routine (step 63), and then by ascertaining where bridges are present in the network using the "tests for bridges" routine (step 64); finally, the main program terminates.

Figure 8 illustrates the interrupt service routine used to derive sub-network traffic matrices from the received collected-data packets. The interrupt service routine is called in response to the generation of an interrupt by the network interface of the station 13 following the receipt thereby of a collected-data packet and the storage of that packet in the input queue data structure 50. Upon start-up of the interrupt service routine, the normal housekeeping tasks of storing the volatile environment of the main program and masking interrupts is effected (step 65). Next, the header of the collected-data packet at the top of the input queue is examined (step 66). The source address contained in the header identifies the monitoring device that generated the collected-data packet; indeed, on the assumption that one monitoring device is associated with each sub-network of the network, the address of the monitoring device also serves to identify the associated sub-network. The monitoring device addresses are therefore used either directly or indirectly as the sub-network identities SN-ID. By examining the source address contained in the header of the collected-data packet under examination, it is therefore possible to tell, by checking against the sub-network list 51, whether the collected-data packet comes from a known sub-network or whether the packet indicates the presence of a previously unknown sub-network (step 67). If a new sub-network is identified, then a new entry is made in the sub-network list 51 and a new sub network traffic matrix array 53 is created (step 68); the TM-POINTER of the sub-network entry is set to point to the new traffic matrix array whilst the S-POINTER is set to null.

Thereafter, the interrupt service routine goes on to examine the contents of the data field of the collected-data package under consideration (step 69). A check is made of the source station and destination station addresses held in the data field to ascertain if either of these addresses indicates the presence of a previously unknown station, that is, a station not contained in the station list 52 (step 70). If a new station is identified, then the station list 52 is updated (with its NEXT-S POINTER set to null) and the existing sub-network traffic matrices 53 are extended to include the new station (step 71).

Once the foregoing preliminary steps have been effected, the interrupt service routine updates the traffic matrix 53 for the relevant sub-network (as identified by the source address in the header of the collected-data packet) by incrementing the entry for the source station/destination station pair concerned (as indicated by the addresses held in the data field of the colleted-data packet) - see step 72.

Because of the sampled nature of the information provided by the monitoring devices 12, the sub-network traffic matrices built directly using the raw data from the monitoring devices 12, is preferably subject to statistical processing. This processing is effected in step 62 of the main program at the time-out of the sampling period. However, in order to carry out this processing, it is necessary to record the total number of packets carried by each sub-network during the sampling period. As explained above, the total current packet count for a sub-network is included in the information field of each collected-data packet sent to the processing station 13. In order to ascertain the total number of packets carried on a sub-network during the sampling period, step 73 of the interrupt service routine is operative to record both the current packet count for the first collected-data packet received in respect of a sub-network and also the current packet count of the most recent collected-data packet received during the sampling period in respect of that sub-network. These count values can be recorded for each network by appropriate fields (not shown) in the corresponding sub-network entry in the sub-network list 51. At the end of the sampling period, subtraction of the count values will give the total number of packets carried by the sub-network during the sampling period.

Finally, the input queue 50 is checked to ensure that no new collected-data packets have been received whilst the interrupt service routine has been running (step 74); assuming this is the case, the interrupt service routine terminates (step 75) by restoring the main program environment parameters and unmasking the interrupts. In the event that the input queue is not empty, steps 66 to 73 are repeated.

Following the termination of the sampling period, the main program calls the routine for effecting statistical processing of the sub-network traffic matrices (step 62 of Figure 7). This processing involves deriving for each element of each sub-network traffic matrix, mean and variance values for an assumed normal distribution, these values being stored back into the relevant traffic matrix array. In order to calculate these mean and variance values, it is necessary to know not only the basic aggregated number of relevant samples "$o_c$" constituted by each traffic matrix element (that is, the number of samples of a class"C") , but also the total number "o" of samples involved in the generation of the relevant sub-network traffic matrix, and the total number of packets "f" carried by the sub-network during the sampling period. The total number "o" of samples can be obtained either by summing all elements of the relevant sub-network traffic matrix or by keeping a running total during the sampling period. As already discussed, the total number of packets "f" is obtained by subtracting an initial packet count value from a final count value, both these values being stored in the sub-network list 51. The values "$o_c$", "o" and "f" are then used in accordance with the following

$$\text{estimate of mean} = fo_c/o \tag{1}$$

$$\text{estimate of variance} = f^2(o\text{-}o_c)o_c/o^3 \tag{2}$$

Following this statistical processing of the sub-network traffic matrix elements, the processing routine 62 may go on to derive a site traffic matrix (that is, a traffic matrix for all sub-networks) by taking the maximum mean value for each source station/destination station pairing, to be found amongst all the sub-network traffic matrices and using this value as the entry for that pairing in the site traffic matrix.

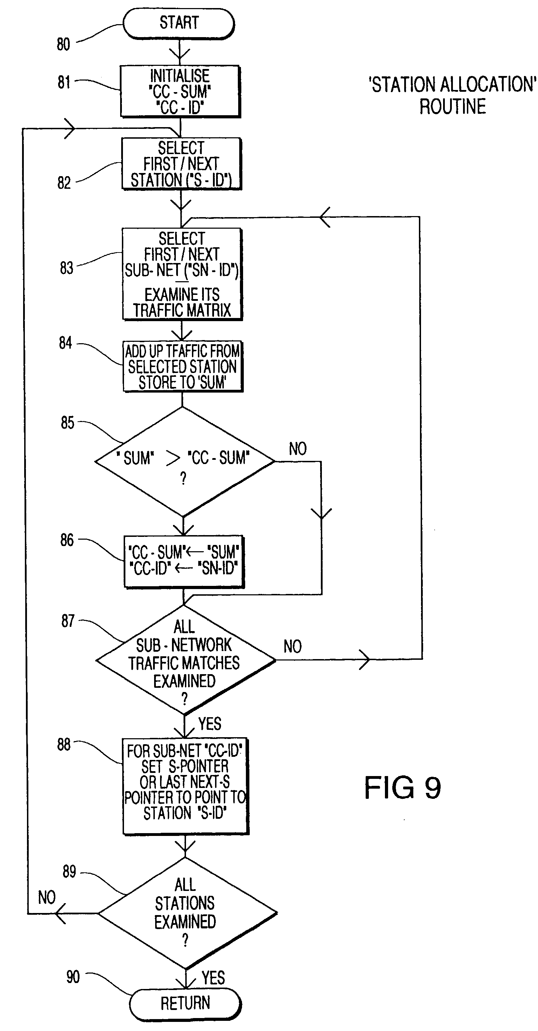

The "station allocation" routine is called by the main program following processing of the traffic matrices, is illustrated in Figure 9. This routine operates by taking each station in turn and searching through all the sub-network traffic matrices to identify the sub-network carrying the most traffic sourcing from the station concerned; this sub-network is then treated as the one to which the station is directly connected and an appropriate link is made in the linked list linking each sub-network to its associated stations. More particularly, following the start up of the routine (step 80) two variables are initialised to zero, these being the variables "CC-SUM" and "CC-ID" (see step 81). The variable CC-ID is used to hold the identity (SN-ID) of the sub-network which at any particular point during execution of station allocation routine is the current choice for being the sub-network associated with a station under consideration; the variable CC-SUM holds the sum of packets sourcing from the station under consideration that was calculated for the current choice sub-network.

Following initialisation of the variables CC-ID and CC-SUM, the station allocation routine selects in turn each station in the station list 52 and effects steps 83 to 88 for each station. This successive selection and processing is achieved by a loop set up by steps 82 and 89 in combination. For each station (identity "S-ID"), each sub-network contained in the sub-network list 51 is considered in turn and its traffic matrix examined, this successive examination being carried out in the loop established by steps 83 and 87 in cooperation. For each sub-network traffic matrix examined, the traffic sourcing from the currently selected station is added up for all destination stations and the resulting number is stored to variable "SUM" (step 84). The value of "SUM" is then compared with the value held in "CC-SUM" (step 85); if the former is greater than the latter then the value held in "SUM" is transferred to "CC-SUM" and the sub-network identity "SN-ID" associated with the sub-network traffic matrix under consideration is stored in the variable "CC-ID" (step 86).

The comparison of "SUM" and "CC-SUM" is done using hypothesis testing techniques in view of the statistical nature of the quantities concerned. Such techniques are well known to persons skilled in the art and can be found in many standard works (for example, "Introductory Probability and Statistical Applications", Meyer, published by Addison-Wesley, 2nd Edition 1970). Accordingly, a description of the processing involved will not be given here except to note that where the compared mean values are within a certain range of each other, a judgement will be made that no decision can be validly made as to which is the greater. Where such a judgement is made, this is noted since it implies that no valid allocation can be made to associate the station concerned with a particular sub-network (of course, if a subsequent value of "SUM" for the station does exceed "CC-SUM" sufficiently to enable a statistically valid decision to be made, then this will override any previous 'indeterminable' judgement made for the station).

Step 87 loops the process until all sub-network traffic matrices have been examined in respect of a particular station. Upon exiting of this loop, the variable "CC-ID" will contain the identity of the sub-network whose traffic matrix contained the highest number of entries for traffic sourcing from the station under consideration. This sub-network is taken to be one to which the station under consideration is connected (unless, as indicated, a judgement has been made that a decision cannot be validly made). Therefore, where the station under consideration is the first to be allocated to the sub-network identifed by "CC-ID" (as indicated by the null setting of the pointer S-POINTER in the sub-network entry), the S-POINTER for that sub-network entry is set to point to the entry in the station list 52 corresponding to the station (identity "S-ID") under consideration (step 88). Where the station under consideration is not the first to be allocated to the network identifed by "CC-ID", then the chain of stations associated with the sub-network and pointed to by the relevant S-POINTER is followed to the last station entry in the chain and then the NEXT-S POINTER of that station entry is set to point to the entry for the station under consideration.

Thereafter, step 89 causes the routine to loop back to step 82 until all the stations have been allocated to sub-networks. When this is achieved, the routine terminates (step 19).

After allocating stations to sub-networks, the main program (Figure 7) initiates the "tests for bridges" routine in order to ascertain which pairings of sub-networks are interconnected by bridges. Before describing this routine in detail, the basis for the tests used to identify bridges will be discussed.

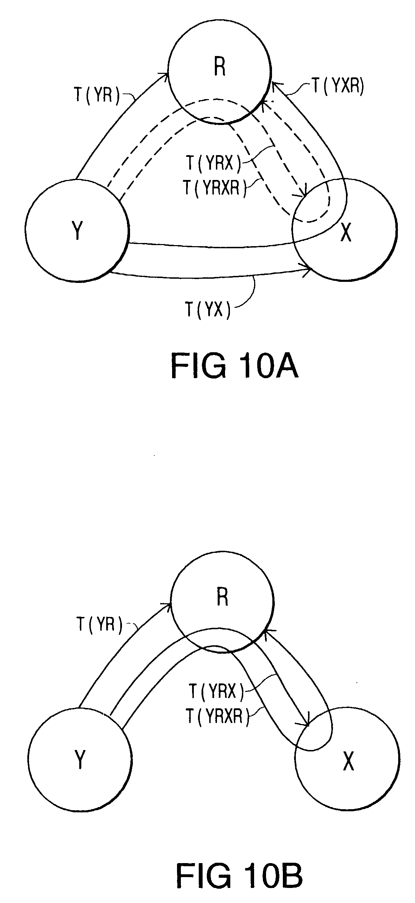

Consider the case where it is desired to ascertain whether a bridge directly connects two sub-networks Y and X such as to allow non-local traffic on sub-network Y to pass to sub-network X. If the remaining sub-networks of the network (that is, the group of sub-networks other than X and Y) are considered as a group R, then the network and the flow of traffic from sub-network Y can be represented by the diagram of Figure 10A in the case where a bridge does directly connect sub-networks Y and X, and by the diagram of Figure 10B in the case where there is no bridge connecting sub-networks Y and X. In these diagrams, various traffic flow components are represented by the letter 'T' followed in parenthesis by letters representing the sequence of sub-networks followed by the traffic component from its source on sub-network Y, to its destination. Thus the component of traffic sourcing on sub-network Y and passing to sub-network X through the sub-network group R, is represented by T(YRX).

The dashed traffic flow components T(YRX) and T(YRXR) shown in Figure 10A, will only be present where the network topology includes a loop providing both a direct and an indirect path to sub-network X. Indeed, the traffic flow components T(YR) and T(YXR) of Figure 10A may also not exist if the sub-networks R are only connected to sub-network Y through sub-network X.

In the first of the three tests for a bridge, consideration is given to what elements of the total traffic coming from sub-network Y (regardless of destination) are seen on the sub-network X and on the sub-network group R. In this consideration, the following representation is used:

$T_1 =$        all traffic from sub-network Y, regardless of destination;

$[T_1]_X =$        that part of $T_1$ seen on sub-network X;

$T_1(Y..) =$        that component of $T_1$ following the route indicated in parenthesis.

By reference to Figure 10A, it can be seen that when a bridge directly links sub-network Y to sub-network X:

$$[T_1]_X = T_1(YX) + T_1(YXR) + T_1(YRX) + T_1(YRXR) \qquad (3)$$

$$[T_1]_R = T_1(YR) + T_1(YXR) + T_1(YRX) + T_1(YRXR) \qquad (4)$$

Formulae (3) and (4) represent the most general cases. The last two components of both formula (3) and (4) will not be present in a non-looped network where there is only a direct path to sub-network X. Furthermore, these components, and also the component $T_1(YR)$ from formula (4) will be absent if the only bridge from sub-network Y is the one connecting to sub-network X.

Referring now to Figure 10B, it can be seen that in the absence of a bridge directly linking sub-network Y to sub-network X:

$$[T_1]_X = T_1(YRX) + T_1(YRXR) \qquad (5)$$

$$T_1]_R = T_1(YRX) + T_1(YRXR) + T_1(YR) \qquad (6)$$

from which it follows that, absent a bridge connecting sub-network Y to sub-network X,

$$[T_1]_R >= [T_1]_X \qquad (7)$$

If formula (5) is not satisfied, ie. if:

$$[T_1]_X > [T_1]_R \qquad (8)$$

then a bridge must exist directly connecting sub-network Y to sub-network X. Stated in words, a bridge can be taken to exist between sub-network Y and sub-network X, if there is more traffic from stations on sub-network Y seen on sub-network X, than seen on all the sub-networks of the remaining group R. This test will not necessarily identify a bridge which exists between sub-networks Y and X, but it will do so in many cases and will not find a bridge where none exists.

The second of the three tests for a bridge is similar to the first but only considers the traffic sourcing from sub-network Y that is not destined for sub-network X, this traffic being designated $T_2$. By reference to the traffic components shown in Figure 10B not destined for sub-network X, it can be seen that in the absence of a brdige linking sub-network Y to sub-network X:

$$[T_2]_X = T_2(YRXR) \qquad (9)$$

$$[T_2]_R = T_2(YR) + T_2(YRXR) \qquad (10)$$

From this it follows that in the absence of a bridge:

$$[T_2]_R >= [T_2]_X \qquad (11)$$

if formula (11) is not satisfied, i.e. if:

$$[T_2]_X > [T_2]_R \qquad (12)$$

then a bridge must exist directly connecting sub-network Y to sub-network X. In other words, a bridge can be taken to exist between sub-network Y and sub-network X, if there is more traffic from stations on sub-network Y not destined for sub-network X, seen as sub-network X, than seen on all the sub-networks of the remaining group R. Again, this test will not necessarily find a bridge but it will not find one if one does not exist.

The third of the three tests for the presence of a bridge relies on the fact that most practical bridges are 'leaky', that is, they allow a small portion of the traffic destined for a sub-network connected to the bridge to cross through the bridge to a connected sub-network. This leaked traffic was not taken into account in considering the traffic components relevant to the first two tests as the leaked components will be small in comparison with the other components and, in any case, as will be apparent from what follows, the presence of these leaked components does not alter the validity of the previously derived test formulae.

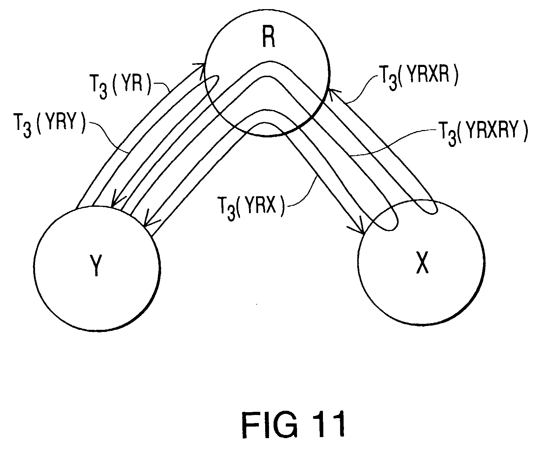

If the traffic sourcing from sub-network Y and destined from sub-network Y is designated $T_3$, then the possible traffic components are as shown in Figure 11. It should be noted that the fate of the 'leaked' traffic is uncertain and will depend on the nature of the operation of the bridges of the network. Thus, whilst the bridges may serve to filter out the leaked traffic from further transmission through the network, this may not always be the case. Accordingly, Figure 11 includes all cases of the leaked traffic being allowed to return to sub-network Y as well as all cases of the leaked traffic being filtered out.

From Figure 11 it can be seen that in the absence of a bridge linking sub-network Y to sub-network X:

$$[T_3]_X = T_3(YRXRY) + T_3(YRX) + T_3(YRXR) \qquad (13)$$

$$[T_3]_R = T_3(YRXRY) + T_3(YRX) + T_3(YRXR)+$$

$$+T_3(YR) + T_3(YRY) \qquad (14)$$

From this it follows that in the absence of a bridge:

$$[T_3]_R >= [T_3]_X \qquad (15)$$

If formula (15) is not satisfied, ie. if:

$$[T_3]_X > [T_3]_R \qquad (16)$$

then a bridge must exist directly connecting sub-network Y to sub-network X. In other words, a bridge can be taken to exist between sub-network Y and sub-network X, if there is more traffic from stations on sub-network Y destined for sub-network Y, seen on sub-network X, than seen on all the sub-networks of the remaining group R. Again, this test will not necessarily find a bridge but it will not fine one if one does not exist.

It will be appreciated that in view of the direction of the inequality in formula (16), superimposing the leakage traffic flows onto those discussed above in respect of the first and second bridge tests, does not alter the results obtained in formulas (8) and (12).

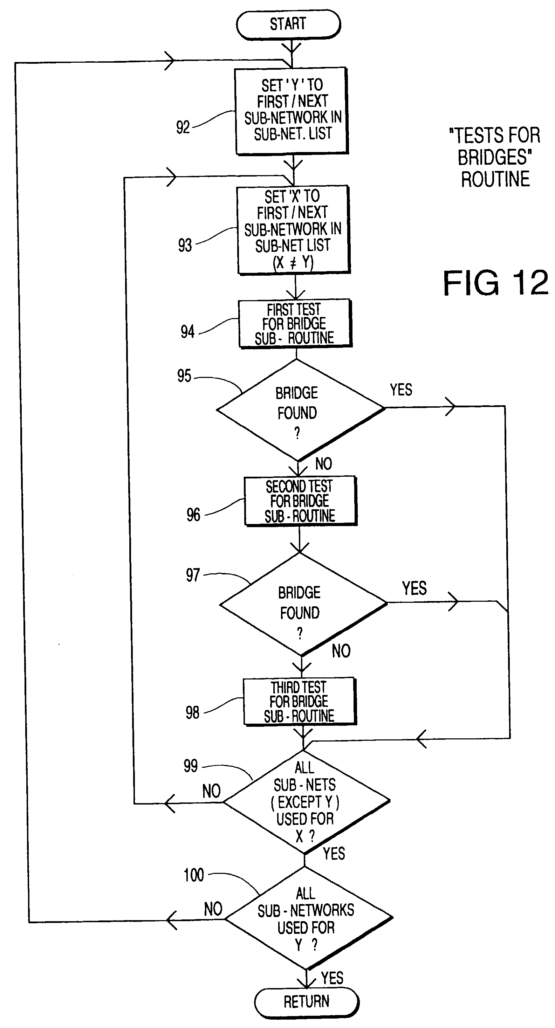

The "test for bridges" routine shown in Figure 12 takes each pairing of sub-networks and then applies each of the three tests for bridges described above to ascertain whether or not a bridge is present linking a first one of the sub-networks to the second. The nature of the tests is such that they are uni-directional - that is, they test for whether there is a bridge connection allowing traffic flow in one direction from one sub-network to the other. However, the routine of Figure 12 applies the tests in both directions by first applying the tests to the sub-network pair in one ordering and then subsequently applying the tests to the sub-network pair in the ordering.

Considering Figure 12 in more detail, each sub-network of the sub-network list 51 is taken in turn as the first sub-network Y of a sub-network pair to be subjected to the bridge tests (see step 91). For each sub-network assigned as the sub-network Y, each of the remaining sub-networks is taken in turn as the second sub-network X of the pair of sub-networks to be tested (step 93). Once the pair of sub-networks Y,X to be tested has been set up, the first test for a bridge is applied by calling an appropriate routine (step 94). After this first test has been completed, a check is made to see whether the test were successful, if it was, then the second and third tests are not applied to the pair Y,X. However, if a bridge was not found by the first test, the second test is then executed (step 96).

If after completion of the second test, a bridge still has not been found between pairing YX (step 97), then the third test for the presence of the bridge is carried out (step 98).

The situation is then reached when either a bridge has been found between the sub-network pair YX, or all three tests have been carried out and no bridge has been found. Where a bridge has been found, the bridge list will have been updated as the final step of the relevant bridge test sub-network.

Thereafter, the next sub-network pairing is taken, either by looping back to select the next second sub-network X (step 99), or where all the sub-networks (except for the current Y sub-network) have been used as the second sub-network X, by looping back to select a new sub-network for the first sub-network Y (step 100).

In due course, all sub-network pairings will have been tested in both directions. Thereafter, the "test for bridges" routine is terminated.

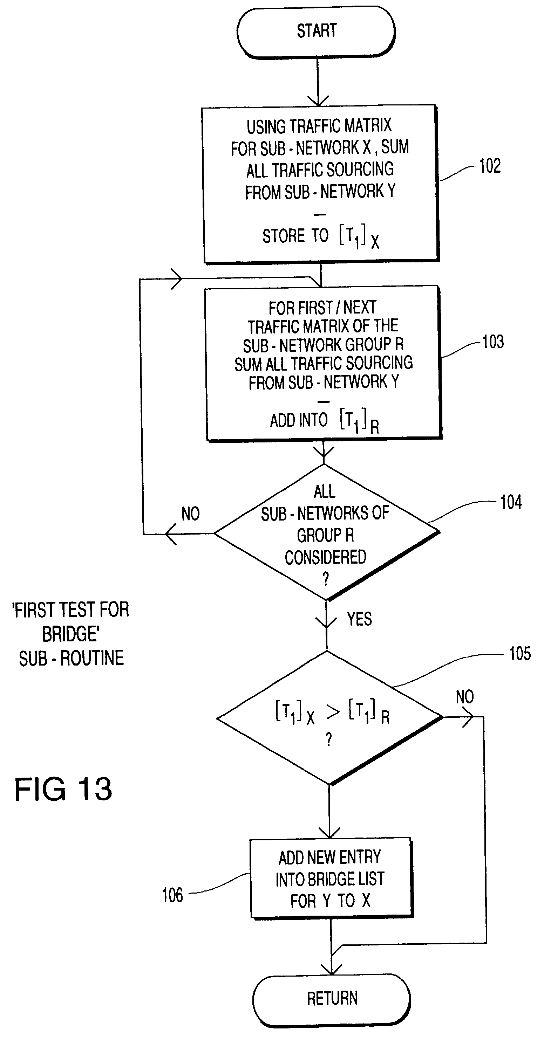

Figure 13 illustrates the "first test for bridge" sub routine. It will be recalled that this first test involves comparing the total of all the traffic sourcing from a first sub-network Y as seen on a second sub-network X, with the total of all the traffic sourcing from the sub-network Y as seen on all the other sub-networks (that is, excepting X and Y). The first step 102 of the sub routine involves accessing the traffic matrix for the sub-network X and summing all traffic sourcing from sub-network Y (this traffic being the traffic originating from the stations on sub-network Y, these stations being identified by reference to the linked list starting at the S-POINTER for sub-network Y). The resultant sum is stored to a variable representing $[T_1]_X$.

Next, in step 103 and 104 the traffic matrix for each sub-network other than the networks Y and X is examined in turn and an accumulative total arrived for traffic sourcing from sub-network Y, no regard being paid to the fact that the same traffic sourcing from sub-network Y may be viewed on several of the sub-networks under consideration. The total traffic value derived from all these sub-network traffic matrices is stored in a variable representing $[T_1]_R$. Next, the values of $[T_1]_X$ and $[T_1]_R$ are compared (step 105); in the present case, in view of the statistical nature of the data being processed, this comparison is done using hypothesis testing techniques. If the value of $[T_1]_X$ is greater than the value of $[T_1]_R$ then a decision is made that a bridge exists permitting traffic flow directly from sub-network Y to sub-network X; a corresponding entry is therefore made in the bridge list identifying the new bridge and the first and second sub-networks that it links (step 106). Thereafter, "the first test for bridge" sub-routine terminates.

The "second test for bridge" sub-routine is similar to that shown in Figure 13 except that only traffic sourcing from sub-network Y that is not destined for sub-network X is totalled in the steps corresponding to steps 102 and 103.

The "third test for a bridge" sub-routine is also similar to that shown in Figure 13 but with only traffic sourcing from sub-network Y that is also destined for sub-network Y being totalled in the steps corresponding to the steps 102 and 103.

Many variations can be made to the above-described topology discovery method. For example, the or each test for a bridge can be applied in respect of traffic from any particular station on the sub-network Y of a sub-network pair Y,X under consideration and the test can be repeated for traffic from each station on the sub-network Y. Furthermore, the traffic matrix data may be derived by the monitoring devices themselves and then passed to the processing station 13 at the end of the sampling period; in this case, the monitoring devices could record each and every packet rather than sampling the packets. Where only particular topology features are required or only particular tests are to be used, the provision of the full range of traffic information such as is contained in the sub-network traffic matrices is unnecessary. For example, where only the first test for a bridge is to be used and the source information contained in a packet indicates directly the originating sub-network, the monitoring devices can directly record how many packets are observed sourcing from a particular sub-network and this data can then be supplied to the station 13 for immediate use in the "first test for a bridge" sub-routine (Figure 13).

Although the above disclosed topology discovery method has been described in relation to an Ethernet-type network, it will be appreciated that it can also be applied to other networks, such as an Internet network, to ascertain network topology features.

The foregoing topology discovery method has been described in terms of data structures that can be readily implemented using traditional programming techniques that consider programs and data as separate entities; however, it will be appreciated that the described method can be implemented using techniques such as object-oriented programming.

## Claims

1. A method of ascertaining topology features of a network that comprises a plurality of sub-networks, spanning devices (14) interconnecting the sub-networks, and stations (11) operative to source and/or sink traffic to/from the sub-networks, the traffic being in the form of discrete message packets each including source and destination information (15), characterised in that said method comprises the steps of:

   - monitoring the traffic on at least some of said sub-networks to derive data concerning at least the origins of the traffic so monitored,
   - determining measures of the amount of traffic originating from a particular source, or a subset of this traffic, as seen on different parts of the network said particular source comprising at least one station, and
   - comparing the said measures to determine which of said parts of the network carries the most traffic of interest from said particular source and thereby determine selected topology features of the network regarding said particular source.

**2.** A method, according to claim 1, of ascertaining to which said sub-network a selected said station (11) is connected where said source information included in said message packets serves to identify the stations sourcing the packets, said determining step (65-75, 84) serving to determine the amount of traffic originating from said selected station (11) that is carried by each said sub-network, and said comparing step (85-87) involving determining the sub-network carrying the most traffic from said selected station (11), this sub-network being taken as the one to which said selected station (11), is connected.

**3.** A method, according to claim 1, of ascertaining to which said sub-networks said stations (11) are connected where said source information included in said message packets serves to identify the stations sourcing the packets, said method involving carrying out the method of claim 2 for each said station (11) with the monitoring step (40-47) being carried out for all stations concurrently.

**4.** A method, according to claim 1, of ascertaining whether a first said sub-network (Y) is directly connected by a said spanning device (14) to a second said sub-network (X), wherein:

- said method includes the step of providing association information (40-47, 65-75, 63) enabling the said source information included in a message packet to be used to identify a message packet as having originated from said first sub-network (Y);
- said monitoring step (40-47) involves monitoring the traffic on said second sub-network (X) and on each sub-network of the group (R) of sub-networks made up of all said sub-networks other than said first and second sub-networks,
- said determining step (65-75, 102, 103) involves determining, with the use of said association information, measures of the amounts of traffic sourcing from said first sub-network (Y) that are carried by said second sub-network (X) and the sub-networks of said group (R) of sub-networks; and
- said comparing step (105) is operative to use said measures to compare the said amounts of traffic ($[T_1]_X$, $[T_1]_R$) sourcing from said first sub-network (Y), that are respectively carried by said second sub-network (X) and by the sub-networks of said group (R) taken together, the comparing step determining that a spanning device (14) directly connects the first sub-network (Y) to the second (X) when the larger of these amounts of traffic is carried by said second sub-network (X).

**5.** A method, according to claim 1, of ascertaining whether a first said sub-network (Y) is directly connected by a said spanning device (14) to a second said sub-network (X), wherein:

- said method includes the step of providing association information (40-47, 65-75, 63) enabling:

    (a) the said source information included in a message packet to be used to identify a message packet as having originated from said first sub-network (Y); and
    (b) the said destination information included in a message packet to be used to identify a message packet as having a destination other than said second sub-network (X);

- said monitoring step (40-47, 65-75, 63) involves monitoring the traffic on said second sub-network (X) and on each sub-network of the group (R) of sub-networks made up of all said sub-networks other than said first and second sub-networks,
- said determining step (65-75, 96) involves determining, with the use of said association information, measures of the amounts of traffic sourcing from said first sub-network (Y) and having a destination other than on said second sub-network (X), that are carried by said second sub-network (X) and the sub-networks of said group (R) of sub-networks; and
- said comparing step [96] is operative to use said measures to compare the said amounts of traffic ($[T_2]_X$, $[T_2]_R$) sourcing from said first sub-network (Y) and having a destination other than on said second sub-network (X), that are respectively carried by said second sub-network (X) and by the sub-networks of said group (R) taken together, the comparing step determining that a spanning device (14) directly connects the first sub-network (Y) to the second (X) when the larger of these amounts of traffic is carried by said second sub-network (X).

**6.** A method, according to claim 1, of ascertaining whether a first said sub-network (Y) is directly connected by a said spanning device (14) to a second said sub-network (X) where the spanning devices (14) used in the network do not act perfectly to block messages packets with a destination on a connected sub-network from passing through the spanning device (14) from that sub-network to another, wherein:

- said method includes the step of providing association information (40-47, 65-75, 63) enabling:

  (a) the said source information included in a message packet to be used to identify a message packet as having originated from said first sub-network (Y); and
  (b) the said destination information included in a message packet to be used to identify a message packet as having a destination on said first sub-network (Y);

- said monitoring step (40-47) involves monitoring the traffic on said second sub-network (X) and on each sub-network of the group (R) of sub-networks made up of all said sub-networks other than said first and second sub-networks, whereby to derive,
- said determining step (65-75, 98), determining with the use of said association information, measures of the amounts of traffic sourcing from said first sub-network (Y) and having a destination on said first sub-network (Y), that are carried by said second sub-network (X) and the sub-networks of said group (R) of sub-networks; and
- said comparing step (98) is operative to use said data to compare the said amounts of traffic ($[T_3]_X$, $[T_3]_R$) sourcing from said first sub-network (Y) and having a destination on said first sub-network (Y), that are respectively carried by said second sub-network (X) and by the sub-networks of said group (R) taken together, the comparing step determining that a spanning device (14) directly connects the first sub-network (Y) to the second (X) when the larger of these amounts of traffic is carried by said second sub-network (X).

7. A method according to claim 4, 5 or 6, wherein said determining step (94; 96; 98) derives the relevant amount of traffic sourcing from said first sub-network (Y) that is carried by the sub-networks of said group (R) taken together, by adding together the corresponding traffic amounts for each sub-network of said group (R) without regard to any duplication that may occur as a result pf the same message packet being monitored on more than one sub-network of the group.

8. A method according to claim 4, wherein said association information further enables the said destination information included in a message packet to be used to identify the destination sub-network of the packet, said determining step (94) deriving the said amount of traffic sourcing from said first sub-network (Y) that is carried by the sub-networks of said group (R) taken together, by:

   - determining for each sub-network of said group (R), the components of the sub-network traffic sourcing from said first sub-network (Y), that are destined for that sub-network and for said second sub-network (Y), and
   - adding together the sub-network traffic components so determined for all the sub-networks of said group (R).

9. A method according to claim 5 or 6, wherein said determining step derives the relevant said amount of traffic sourcing from said first sub-network (Y) that is carried by the sub-networks of said group (R) taken together, by:

   - determining for each sub-network of said group (R), the components of the relevant sub-network traffic sourcing from said first sub-network (Y), that are destined for that sub-network and for said second sub-network (X), and
   - adding together the relevant sub-network traffic components so determined for all the sub-networks of said group (R).

10. A method according to claim 4, 5 or 6, wherein said step of providing association information (40-47, 65-75, 63) involves the method of claim 2 or 3 for associating stations with said first sub-network, the monitoring step effected by the method of claim 2 or 3 being carried out either independently of, or in conjunction with, the monitoring step recited in the relevant one of claims 4, 5 or 6.

11. A method according to claim 4, 5 or 6, wherein said association information further enables the said source information included in a message packet to be used to identify from which station on said first sub-network a said message packet has originated; the said determining and comparing steps for determining whether a spanning device (14) is present between said first and second sub-networks (Y,X), being carried out in respect of traffic from the or each station of said first sub-network taken separately.

12. A method of ascertaining whether two sub-networks of a network are directly connected by a bi-directional spanning device (14), said method involving carrying out the method of claim 4, 5 or 6 in respect of traffic sourcing from one said sub-network and then repeating that method for traffic sourcing from the other said sub-network.

13. A method of ascertaining the topology of at least a portion of a network in terms of its sub-networks and their interconnection by spanning devices (14), said method involving carrying out the method of any one of claims 4, 5 or 6, in respect of each pairing of sub-networks of the network or the portion thereof under consideration, whereby to determine which of the sub-networks are interconnected by spanning devices.

14. A method according to any one of the preceding claims, wherein said determining step (65-75) involves the generation of traffic matrices for each sub-network.

15. A method according to any one of the preceding claims, wherein said monitoring step (40-47, 65-75, 63) involves sampling the traffic on the sub-networks, said comparing step (94; 96; 98) effecting its determination by using hypothesis testing.

## Patentansprüche

1. Ein Verfahren des Feststellens von Topologiemerkmalen eines Netzwerks, das eine Mehrzahl von Unternetzwerken, Überbrückungsvorrichtungen (14), die die Unternetzwerke miteinander verbinden, und Stationen (11) aufweist, die wirksam sind, um Verkehr zu/von den Unternetzwerken zu senden und/oder empfangen, wobei der Verkehr in der Form von diskreten Nachrichtenpaketen stattfindet, von denen jedes Quellen- und Bestimmungs-Informationen (15) enthält, dadurch gekennzeichnet, daß das Verfahren folgende Schritte aufweist:

   - Überwachen des Verkehrs auf zumindest einigen der Unternetzwerke, um Daten herzuleiten, die zumindest die Ursprünge des Verkehrs, der so überwacht wird, betreffen,

   - Bestimmen von Maßen des Verkehrsbetrags, der von einer speziellen Quelle stammt, oder eines Teilsatzes dieses Verkehrs, wie er auf unterschiedlichen Teilen des Netzwerks zu sehen ist, wobei die spezielle Quelle zumindest eine Station aufweist, und

   - Vergleichen der Maße, um zu bestimmen, welcher der Teile des Netzwerks den meisten interessierenden Verkehr von der speziellen Quelle überträgt, um dadurch ausgewählte Topologiemerkmale des Netzwerks bezüglich der speziellen Quelle zu bestimmen.

2. Ein Verfahren des Feststellens, mit welchem Unternetzwerk eine ausgewählte der Stationen (11) verbunden ist, gemäß Anspruch 1, wobei die Quelleninformationen, die in den Nachrichtenpaketen enthalten sind, dazu dienen, die Stationen zu identifizieren, von denen die Pakete stammen, wobei der Bestimmungsschritt (65 bis 75, 84) dazu dient, den von der ausgewählten Station (11) stammenden Verkehrsbetrag zu bestimmen, der durch jedes Unternetzwerk übertragen wird, und wobei der Vergleichs-schritt (85 bis 87) das Bestimmen des Unternetzwerks enthält, das den meisten Verkehr von der ausgewählten Station (11) überträgt, wobei dieses Unternetzwerk als das angesehen wird, mit dem die ausgewählte Station (11) verbunden ist.

3. Ein Verfahren des Feststellens, mit welchen Unternetzwerken die Stationen (11) verbunden sind, gemäß Anspruch 1, wobei die Quelleninformationen, die in den Nachrichtenpaketen enthalten sind, dazu dienen, die Stationen zu identifizieren, von denen die Pakete stammen, wobei das Verfahren das Ausführen des Verfahrens gemäß Anspruch 2 für jede Station (11) einschließt, wobei der Überwachungsschritt (40 bis 47) gleichzeitig für alle Stationen durchgeführt wird.

4. Ein Verfahren des Feststellens, ob ein erstes Unternetzwerk (Y) durch die Überbrückungsvorrichtung (14) direkt mit einem zweiten Unternetzwerk (X) verbunden ist, gemäß Anspruch 1, wobei:

   - das Verfahren den Schritt des Lieferns von Zuordnungsinformationen (40 bis 47, 65 bis 75, 63) aufweist, die ermöglichen, daß die Quelleninformationen, die in einem Nachrichtenpaket enthalten sind, verwendet werden, um ein Nachrichtenpaket als von dem ersten Unternetzwerk (Y) abstammend zu identifizieren;

   - der Überwachungsschritt (40 bis 47) das Überwachen des Verkehrs auf dem zweiten Unternetzwerk (X) und auf jedem Unternetzwerk der Gruppe (R) von Unternetzwerken, die aus allen von dem ersten und dem zweiten Unternetzwerk verschiedenen Unternetzwerken gebildet ist, einschließt;

- der Bestimmungsschritt (65 bis 75, 102, 103) das Bestimmen von Maßen der von dem ersten Teilnetzwerk (Y) stammenden Verkehrsbeträge, die durch das zweite Unternetzwerk (X) und die Unternetzwerke der Gruppe (R) von Unternetzwerken übertragen werden, unter Verwendung der Zuordnungsinfornationen einschließt; und

- der Vergleichsschritt (105) wirksam ist, um die Maße zu verwenden, um die von dem ersten Unternetzwerk (Y) stammenden Verkehrsbeträge ($[T_1]_X$, $[T_1]_R$), die jeweils durch das zweite Unternetzwerk (X) und durch die Unternetzwerke der Gruppe (R) zusammengenommen übertragen werden, zu vergleichen, wobei der Vergleichsschritt bestimmt, daß eine Überbrückungsvorrichtung (14) das erste Unternetzwerk (Y) direkt mit dem zweiten (X) verbindet, wenn der größere dieser Verkehrsbeträge durch das zweite Unternetzwerk (X) übertragen wird.

5. Ein Verfahren des Feststellens, ob ein erstes der Unternetzwerke (Y) durch eine der Überbrückungsvorrichtungen (14) direkt mit einem zweiten der Unternetzwerke (X) verbunden ist, gemäß Anspruch 1, wobei:

- das Verfahren den Schritt des Lieferns von Zuordnungsinformationen (40 bis 47, 65 bis 75, 63) aufweist, die ermöglichen:

    (a) daß die Quelleninformationen, die in einem Nachrichtenpaket enthalten sind, verwendet werden, um ein Nachrichtenpaket als von dem ersten Unternetzwerk (Y) stammend zu identifizieren; und

    (b) daß die Bestimmungsinformationen, die in einem Nachrichtenpaket enthalten sind, verwendet werden, um ein Nachrichtenpaket als eine andere Bestimmung als das zweite Unternetzwerk (X) aufweisend zu identifizieren;

- der Überwachungsschritt (40 bis 47, 65 bis 75, 63) das Überwachen des Verkehrs auf dem zweiten Unternetzwerk (X) und auf jedem Unternetzwerk der Gruppe (R) von Unternetzwerken, die aus allen von dem ersten und dem zweiten Unternetzwerk verschiedenen Unternetzwerken gebildet ist, einschließt;

- der Bestimmungsschritt (65 bis 75, 96) das Bestimmen von Maßen der von dem ersten Unternetzwerk (Y) abstammenden und eine andere Bestimmung als das zweite Unternetzwerk (X) aufweisenden Verkehrsbeträge, die durch das zweite Unternetzwerk (X) und die Unternetzwerke der Gruppe (R) von Unternetzwerken übertragen werden, unter Verwendung der Zuordnungsinformationen aufweist; und

- der Vergleichsschritt (96) wirksam ist, um die Maße zu verwenden, um die von dem ersten Unternetzwerk (Y) stammenden und eine andere Bestimmung als das zweite Unternetzwerk (X) aufweisenden Verkehrsbeträge ($[T_2]_X$, $[T_2]_R$), die jeweils durch das zweite Unternetzwerk (X) und durch die Unternetzwerke der Gruppe (R) zusammengenommen übertragen werden, zu vergleichen, wobei der Vergleichsschritt bestimmt, daß eine Überbrückungsvorrichtung (14) das erste Unternetzwerk (Y) direkt mit dem zweiten (X) verbindet, wenn der größere dieser Verkehrsbeträge durch das zweite Unternetzwerk (X) übertragen wird.

6. Ein Verfahren des Feststellens, ob ein erstes der Unternetzwerke (Y) durch eine der Überbrückungsvorrichtungen (14) direkt mit einem zweiten der Unternetzwerke (X) verbunden ist, gemäß Anspruch 1, wobei die Überbrückungsvorrichtungen (14), die in dem Netzwerk verwendet sind, nicht perfekt wirksam sind, um zu verhindern, daß Nachrichtenpakete mit einer Bestimmung auf einem verbundenen Unternetzwerk durch die Überbrückungsvorrichtung (14) von diesem Unternetzwerk zu einem anderen zu gelangen, wobei:

- das Verfahren den Schritt des Lieferns von Zuordnungsinformationen (40 bis 47, 65 bis 75, 63) aufweist, die ermöglichen:

    (a) daß die Quelleninformationen, die in einem Nachrichtenpaket enthalten sind, verwendet werden, um ein Nachrichtenpaket als von dem ersten Unternetzwerk (Y) stammend zu identifizieren; und

    (b) daß die Bestimmungsinformationen, die in einem Nachrichtenpaket enthalten sind, verwendet werden, um ein Nachrichtenpaket als eine Bestimmung auf dem ersten Unternetzwerk (Y) aufweisend zu identifizieren;

- der Überwachungsschritt (40 bis 47) das Überwachen des Verkehrs auf dem zweiten Unternetzwerk (X) und auf jedem Unternetzwerk der Gruppe (R) von Unternetzwerken, die aus allen von dem ersten und dem zweiten Unternetzwerk verschiedenen Unternetzwerken gebildet ist, einschließt;

- der Bestimmungsschritt (65 bis 75, 98) das Bestimmen von Maßen der von dem ersten Unternetzwerk (Y) abstammenden und eine Bestimmung auf dem ersten Unternetzwerk (Y) aufweisenden Verkehrsbeträge, die durch das zweite Unternetzwerk (X) und die Unternetzwerke der Gruppe (R) von Unternetzwerken übertragen werden, einschließt; und

- der Vergleichsschritt (98) wirksam ist, um die Daten zu verwenden, um die von dem ersten Unternetzwerk (Y) stammenden und eine Bestimmung auf dem ersten Unternetzwerk (Y) aufweisenden Verkehrsbeträge ($[T_3]_X$, $[T_3]_R$), die jeweils durch das zweite Unternetzwerk (X) und durch die Unternetzwerke der Gruppe (R) zusammengenommen übertragen werden, zu vergleichen, wobei der Vergleichsschritt bestimmt, daß eine Überbrückungsvorrichtung (14) das erste Unternetzwerk (Y) direkt mit dem zweiten (X) verbindet, wenn der größere dieser Verkehrsbeträge durch das zweite Unternetzwerk (X) übertragen wird.

7.  Ein Verfahren gemäß Anspruch 4, 5 oder 6, bei dem der Bestimmungsschritt (94; 96; 98) den relevanten, von dem ersten Unternetzwerk (Y) stammenden Verkehrsbetrag, der durch die Unternetzwerke der Gruppe (R) zusammengenommen übertragen wird, durch das Zusammenaddieren der entsprechenden Verkehrsbeträge für jedes Unternetzwerk der Gruppe (R) ungeachtet jeder Vervielfachung, die als ein Ergebnis dessen, daß das gleiche Nachrichtenpaket auf mehr als einem Unternetzwerk der Gruppe überwacht wird, auftreten kann, herleitet.

8.  Ein Verfahren gemäß Anspruch 4, bei dem die Zuordnungsinformationen ferner ermöglichen, daß die Bestimmungs-informationen, die in einem Nachrichtenpaket enthalten sind, verwendet werden, um das Bestimmungsunternetzwerk des Pakets zu identifizieren, wobei der Bestimmungsschritt (94) den von dem ersten Unternetzwerk (Y) stammenden Verkehrsbetrag, der durch die Unternetzwerke der Gruppe (R) zusammengenommen übertragen wird, wie folgt herleitet:

    - für jedes Unternetzwerk der Gruppe (R) Bestimmen der Komponenten des von dem ersten Unternetzwerk (Y) abstammenden Unternetzwerkverkehrs, die für dieses Unternetzwerk und für das zweite Unternetzwerk (X) bestimmt sind, und

    - Zusammenaddieren der Unternetzwerk-Verkehrskomponenten, die so bestimmt werden, für alle Unternetzwerke der Gruppe (R).

9.  Ein Verfahren gemäß Anspruch 5 oder 6, bei dem der Bestimmungsschritt den relevanten, von dem ersten Unternetzwerk (Y) stammenden Verkehrsbetrag, der durch die Unternetzwerke der Gruppe (R) zusammengenommen übertragen wird, wie folgt herleitet:

    - für jedes Unternetzwerk der Gruppe (R) Bestimmen der Komponenten des relevanten, von dem ersten Unternetzwerk (Y) stammenden Unternetzwerkverkehrs, die für dieses Unternetzwerk und für das zweite Unternetzwerk (X) bestimmt sind, und

    - Zusammenaddieren der relevanten Unternetzwerk-Verkehrskomponenten, die so bestimmt sind, für alle Unternetzwerke der Gruppe (R).

10. Ein Verfahren gemäß Anspruch 4, 5 oder 6, bei dem der Schritt des Lieferns von Zuordnungsinformationen (40 bis 47, 65 bis 75, 63) das Verfahren gemäß Anspruch 2 oder 3 zum Zuordnen von Stationen zu dem ersten Unternetzwerk aufweist, wobei der Überwachungsschritt, der durch das Verfahren gemäß Anspruch 2 oder 3 bewirkt wird, entweder unabhängig von, oder in Verbindung mit, dem Überwachungsschritt, der in dem relevanten der Ansprüche 4, 5 oder 6 dargelegt ist, ausgeführt wird.

11. Ein Verfahren gemäß Anspruch 4, 5 oder 6, bei dem die Zuordnungsinformationen ferner ermöglichen, daß die Quelleninformationen, die in einem Nachrichtenpaket enthalten sind, verwendet werden, um zu identifizieren, von welcher Station auf dem ersten Unternetzwerk eines der Nachrichtenpakete stammte; wobei der Bestimmungsund der Vergleichs-Schritt zum Bestimmen, ob eine Überbrückungsvorrichtung (14) zwischen dem ersten und dem zweiten Unternetzwerk (Y, X) vorliegt, bezüglich einer getrennten Verwendung des Verkehrs von der oder den Stationen des ersten Unternetzwerks durchgeführt wird.

**12.** Ein Verfahren des Feststellens, ob zwei Unternetzwerke eines Netzwerks direkt durch eine bidirektionale überbrückungsvorrichtung (14) verbunden sind, wobei das Verfahren das Durchführen des Verfahrens gemäß Anspruch 4, 5 oder 6 bezüglich des Verkehrs, der von einem der Unternetzwerke stammt, und dann das Wiederholen dieses Verfahrens für den Verkehr, der von den anderen der Unternetzwerke stammt, aufweist.

**13.** Ein Verfahren des Feststellens der Topologie von zumindest einem Abschnitt eines Netzwerks hinsichtlich seiner Unternetzwerke und der Verbindung derselben durch Überbrückungsvorrichtungen (14), wobei das Verfahren das Durchführen des Verfahrens gemäß einem beliebigen der Ansprüche 4, 5 oder 6 bezüglich jeder Paarung von Unternetzwerken des Netzwerks oder des betrachteten Abschnitts desselben aufweist, um dadurch zu bestimmen, welche der Unternetzwerke durch Überbrückungsvorrichtungen miteinander verbunden sind.

**14.** Ein Verfahren gemäß einem beliebigen der vorhergehenden Ansprüche, bei dem der Bestimmungsschritt (65 bis 75) die Erzeugung von Verkehrsmatritzen für jedes Unternetzwerk aufweist.

**15.** Ein Verfahren gemäß einem beliebigen der vorhergehenden Ansprüche, bei dem der Überwachungsschritt (40 bis 47, 65 bis 75, 63) das Abtasten des Verkehrs auf den Unternetzwerken aufweist, wobei der Vergleichsschritt (94; 96; 98) das Bewirken seiner Bestimmung durch das Verwenden eines Hypothesetestens bewirkt.

**Revendications**

**1.** Procédé pour acquérir les caractéristiques topologiques d'un réseau qui comprend une pluralité de sous-réseaux, des dispositifs d'extension (14) interconnectant les sous-réseaux, et des stations (11) fonctionnant en émettant et/ou en absorbant un trafic allant vers les/provenant des sous-réseaux, le trafic étant sous la forme de paquets de messages discrets comportant chacun des informations de source et de destination (15), caractérisé en ce que ledit procédé comprend les étapes de:

- surveillance du trafic au moins sur certains desdits sous-réseaux, pour déterminer des données concernant au moins les origines du trafic ainsi surveillé,
- détermination de mesures de la quantité de trafic ayant pour origine une source particulière, ou d'un sous-ensemble de ce trafic, tel que vu sur différentes parties du réseau, ladite source particulière comprenant au moins une station, et
- comparaison desdites mesures pour déterminer laquelle desdites parties du réseau achemine le plus de trafic intéressant depuis ladite source particulière, et pour déterminer ainsi les caractéristiques topologiques sélectionnées du réseau, concernant ladite source particulière.

**2.** Procédé selon la revendication 1, pour vérifier auquel dit sous-réseau une dite station sélectionnée (11) est connectée lorsque lesdites informations de source incluses dans lesdits paquets de messages servent à identifier les stations source des paquets, ladite étape de détermination (65-75, 84) servant à déterminer la quantité de trafic ayant pour origine ladite station sélectionnée (11), qui est transporté par chaque dit sous-réseau, et ladite étape de comparaison (85-87) impliquant la détermination du sous-réseau transportant la majeure partie du trafic provenant de ladite station sélectionnée (11), ce sous-réseau étant considéré comme celui auquel est connectée ladite station sélectionnée (11).

**3.** Procédé selon la revendication 1, pour vérifier auquel desdits sous-réseaux lesdites stations (11) sont connectées lorsque lesdites informations de source incluses dans lesdits paquets de messages servent à identifier les stations source des paquets, ledit procédé comportant l'exécution du procédé de la revendication 2, pour chaque dite station (11), l'étape de surveillance (40-47) étant exécutée concurremment pour toutes les stations.

**4.** Procédé selon la revendication 1, pour vérifier si un premier dit sous-réseau (Y) est directement connecté par un dit dispositif d'extension (14) à un deuxième dit sous-réseau (X), dans lequel:

- ledit procédé comporte l'étape de fourniture d'informations d'association (40-47, 65-75, 63) permettant auxdites informations de source incluses dans un paquet de messages d'être utilisées pour identifier un paquet de messages comme ayant son origine sur ledit premier sous-réseau (Y);
- ladite étape de surveillance (40-47) comporte la surveillance du trafic sur ledit deuxième sous-réseau (X), et sur chaque sous-réseau du groupe (R) de sous-réseaux constitué de tous lesdits sous-réseaux différents desdits premier et deuxième sous-réseaux;

- ladite étape de détermination (65-75, 102-103) comporte la détermination, à l'aide desdites informations d'association, de mesures des quantités du trafic ayant son origine sur ledit premier sous-réseau (Y), qui sont transportées par ledit deuxième sous-réseau (X) et les sous-réseaux dudit groupe (R) de sous-réseaux; et

- ladite étape de comparaison (105) fonctionne en utilisant lesdites mesures pour comparer lesdites quantités de trafic ($[T_1]_X$, $[T_1]_R$) ayant son origine sur ledit premier sous-réseau (Y), qui sont respectivement transportées par ledit deuxième sous-réseau (X) et par les sous-réseaux dudit groupe (R) considérés ensemble, l'étape de comparaison déterminant qu'un dispositif d'extension (14) connecte directement le premier sous-réseau (Y) au deuxième (X), lorsque la plus grande de ces quantités de trafic est transportée par ledit deuxième sous-réseau (X).

5. Procédé selon la revendication 1, pour vérifier si un premier dit sous-réseau (Y) est directement connecté par un dit dispositif d'extension (14) à un deuxième dit sous-réseau (X), dans lequel:

- ledit procédé comporte l'étape de fourniture d'informations d'association (40-47, 65-75, 63) permettant:

   (a) auxdites informations de source incluses dans un paquet de messages, d'être utilisées pour identifier un paquet de messages comme ayant son origine sur ledit premier sous-réseau (Y); et
   (b) auxdites informations de destination incluses dans un paquet de messages, d'être utilisées pour identifier un paquet de messages comme ayant une destination différente dudit deuxième sous-réseau (X);

- ladite étape de surveillance (40-47, 65-75, 63) comporte la surveillance du trafic sur ledit deuxième sous-réseau (X), et sur chaque sous-réseau du groupe (R) de sous-réseaux constitué de tous lesdits sous-réseaux différents desdits premier et deuxième sous-réseaux;

- ladite étape de détermination (65-75, 96) comporte la détermination, à l'aide desdites informations d'association, de mesures des quantités du trafic ayant son origine sur ledit premier sous-réseau (Y) et ayant une destination différente dudit deuxième sous-réseau (X), qui sont transportées par ledit deuxième sous-réseau (X) et les sous-réseaux dudit groupe (R) de sous-réseaux; et

- ladite étape de comparaison (96) fonctionne en utilisant lesdites mesures pour comparer lesdites quantités de trafic ($[T_2]_X$, $[T_2]_R$) ayant son origine sur ledit premier sous-réseau (Y) et ayant une destination différente dudit deuxième sous-réseau (X), qui sont respectivement transportées par ledit deuxième sous-réseau (X) et par les sous-réseaux dudit groupe (R) considérés ensemble, l'étape de comparaison déterminant qu'un dispositif d'extension (14) connecte directement le premier sous-réseau (Y) au deuxième (X), lorsque la plus grande de ces quantités de trafic est transportée par ledit deuxième sous-réseau (X).

6. Procédé selon la revendication 1, pour vérifier si un premier dit sous-réseau (Y) est directement connecté par un dit dispositif d'extension (14) à un deuxième dit sous-réseau (X) les dispositifs d'extension (14) situés dans le réseau n'agissant pas parfaitement pour empêcher les paquets de messages, ayant une destination sur un sous-réseau connecté, de traverser le dispositif d'extension (14) depuis ce sous-réseau vers un autre, dans lequel:

- ledit procédé comporte l'étape de fourniture d'informations d'association (40-47, 65-75, 63) permettant:

   (a) auxdites informations de source incluses dans un paquet de messages d'être utilisées pour identifier un paquet de messages comme ayant son origine sur ledit premier sous-réseau (Y) ; et
   (b) auxdites informations de destination incluses dans un paquet de messages d'être utilisées pour identifier un paquet de messages comme ayant une destination vers ledit premier sous-réseau (Y) ;

- ladite étape de surveillance (40-47) comporte la surveillance du trafic dudit deuxième sous-réseau (X), et sur chaque sous-réseau du groupe (R) de sous-réseaux constitué de tous lesdits sous-réseaux différents desdits premier et deuxième sous-réseaux;

- ladite étape de détermination (65-75, 98) comporte la détermination, à l'aide desdites informations d'association, de mesures des quantités du trafic ayant son origine sur ledit premier sous-réseau (Y) et ayant une destination vers ledit premier sous-réseau (Y), qui sont transportées par ledit deuxième sous-réseau (X) et les sous-réseaux dudit groupe (R) de sous-réseaux; et

- ladite étape de comparaison (98) fonctionne en utilisant lesdites mesures pour comparer lesdites quantités de trafic ($[T_3]_X$, $[T_3]_R$) provenant dudit premier sous-réseau (Y) ayant une destination sur ledit premier sous-réseau (Y), qui sont respectivement transportées par ledit deuxième sous-réseau (X) et par les sous-réseaux dudit groupe (R) considérés ensemble, l'étape de comparaison déterminant qu'un dispositif d'extension (14) connecte directement le premier sous-réseau (Y) au deuxième (X) lorsque la plus grande de ces quantités de trafic est transportée par ledit deuxième sous-réseau (X).

7. Procédé selon la revendication 4, 5 ou 6, dans lequel ladite étape de détermination (94; 96; 98) détermine la quantité concernée de trafic ayant son origine sur ledit premier sous-réseau (Y) qui est transporté par les sous-réseaux dudit groupe (R) pris ensemble, en additionnant ensemble les quantités de trafic correspondantes pour chaque sous-réseau dudit groupe (R), sans considérer une quelconque copie pouvant se produire en conséquence du fait que le même paquet de messages a été surveillé sur plusieurs sous-réseaux du groupe.

8. Procédé selon la revendication 4, dans lequel lesdites informations d'association permettent en outre auxdites informations de destination contenues dans un paquet de messages d'être utilisées pour identifier le sous-réseau de destination du paquet, ladite étape de détermination (94) déterminant ladite quantité de trafic ayant son origine sur ledit premier sous-réseau (Y) qui est transporté pas les sous-réseaux dudit groupe (R) considérés ensemble, en:

   - déterminant pour chaque sous-réseau dudit groupe (R) des composants du trafic du sous-réseau ayant son origine sur ledit premier sous-réseau (Y), qui sont destinés à ce sous-réseau et audit deuxième sous-réseau (Y), et
   - ajoutant ensemble les composants de trafic de sous-réseaux ainsi déterminés pour l'ensemble des sous-réseaux dudit groupe (R).

9. Procédé selon la revendication 5 ou 6, dans lequel ladite étape de détermination détermine ladite quantité de trafic ayant son origine sur ledit premier sous-réseau (Y) qui est transporté pas les sous-réseaux dudit groupe (R) considérés ensemble, en :

   - déterminant pour chaque sous-réseau dudit groupe (R) des composants du trafic du sous-réseau concerné ayant son origine sur ledit premier sous-réseau (Y), qui sont destinés à ce sous-réseau et audit deuxième sous-réseau (Y), et
   - ajoutant ensemble les composants de trafic de sous-réseaux concernés ainsi déterminés pour l'ensemble des sous-réseaux dudit groupe (R).

10. Procédé selon la revendication 4, 5 ou 6, dans lequel ladite étape de fourniture d'informations d'association (40-47, 65-75, 63) implique le procédé de la revendication 2 ou 3 pour associer des stations audit premier sous-réseau, l'étape de surveillance effectué par le procédé de la revendication 2 ou 3 étant exécuté soit indépendamment, soit conjointement avec l'étape de surveillance présentée dans la revendication concernée des revendications 4, 5 ou 6.

11. Procédé selon la revendication 4, 5 ou 6, dans lequel lesdites informations d'association permettent en outre auxdites informations de source incluses dans un paquet de messages d'être utilisées pour identifier depuis quelle station dudit premier sous-réseau, un dit paquet de messages est originaire; lesdites étapes de détermination et de comparaison pour déterminer si un dispositif d'extension (14) est présent entre lesdits premier et deuxième sous-réseaux (Y, X), étant exécutées en ce qui concerne le trafic provenant de la ou de chaque station dudit premier sous-réseau, considérées séparément.

12. Procédé pour vérifier si deux sous-réseaux d'un réseau sont directement connectés par un dispositif d'extension bidirectionnel (14), ledit procédé impliquant l'exécution du procédé de la revendication 4, 5 ou 6, en ce qui concerne le trafic ayant son origine dans un dit sous-réseau, puis la répétition de ce procédé pour le trafic ayant son origine dans l'autre dit sous-réseau.

13. Procédé pour acquérir la topologie d'au moins une partie d'un réseau en termes de ses sous-réseaux, et leur interconnexion par des dispositifs d'extension (14), ledit procédé comportant l'exécution du procédé selon l'une quelconque des revendications 4, 5 ou 6, en ce qui concerne chaque appariement de sous-réseaux du réseau, ou de la partie de celui-ci considérée, de façon à déterminer lesquels des sous-réseaux sont interconnectés par des dispositifs d'extension.

14. Procédé selon l'une quelconque des revendications précédentes, dans lequel ladite étape de détermination (65-75) implique la génération de matrices de trafic pour chaque sous-réseau.

15. Procédé selon l'une quelconque des revendications précédentes, dans lequel ladite étape de surveillance (40-47, 65-75, 63) implique l'échantillonnage du trafic sur les sous-réseaux, ladite étape de comparaison (94; 96; 98) effectuant sa détermination en utilisant une vérification d'hypothèses.

# FIG 1

# FIG 2

22

FIG 3

START ISR — 40

DECREMENT
RANDOM COUNT — 41

RANDOM
COUNT
ZERO ? — 42

NO

YES

DISCARD HEAD
ENTRY IN RX FIFO — 43

FORM
COLLECTED - DATA
PACKET FROOM
HEAD ENTRY IN
RX FIFO
& PLACE IN
TX FIFO — 46

FETCH NEW
RANDOM COUNT — 47

RX
FIFO EMPTY
? — 44

NO

YES

RETURN — 45

FIG 4

| COLLECTED - DATA PACKET | | | |
|---|---|---|---|
| " | " | " | " |
| " | " | " | " |
| " | " | " | " |

INPUT QUEUE

50

51

| SN - ID | TM-POINTER | S-POINTER |
|---|---|---|
| | | |
| | | |
| | | |
| | | |
| | | |
| | | |

SUB NETWORK LIST

52

STATIONLIST

| S - ID | NEXT-S POINTER |
|---|---|
| | |
| S - ID | NEXT-S POINTER |
| | |
| | |

53

SUB - NETWORK
TRAFFIC
MATRIX

54

BRIDGE LIST

| B - ID | SN - ID | SN - ID |
|---|---|---|
| | | |
| | | |
| | | |

## FIG 5

| SUB - NETWORK TRAFFIC MATRIX | | DESTINATION STATION | | | |
|---|---|---|---|---|---|
| | | 11A | 11B | 11C - - - - - - 11N | |
| | 11A | – | 21 | 9 | 65 |
| SOURCE | 11B | 42 | – | 100 | 100 |
| STATION | 11C | 69 | 84 | – | 15 |
| | 11N | 150 | 29 | 75 | – |

## FIG 6

MAIN PROGRAM

## FIG 7

START

START TIMER — 60

61 — TIMEOUT ? → NO

YES

TRAF. MAT. PROCESSING ROUTINE — 62

'STATION ALLOCATION' ROUTINE — 63

'TESTS FOR BRIDGES' ROUTINE — 64

END

65 — START ISR

66 — EXAMINE HEADER OF COLLECTED - DATA PACKET

67 — NEW SUB - NETWORK ? → YES → UPDATE SUB-NET. LIST — CREATE NEW TRAFFIC MATRIX — 68

NO

69 — EXAMINE CONTENT OF COLLECTED - DATA PACKET

70 — NEW SOURCE / DESTINATION. STATION ? → YES → UPDATE STATION LIST — EXTEND MATRICES — 71

72 — INC ENTRY IN TRAFFIC MATRIX

RECORD PKT. COUNT — 73

INPUT QUEUE EMPTY ? — 74

NO

YES

RETURN — 75

## FIG 8

'STATION ALLOCATION'
ROUTINE

START
80

81 — INITIALISE
"CC - SUM"
"CC - ID"

82 — SELECT
FIRST / NEXT
STATION ("S - ID")

83 — SELECT
FIRST / NEXT
SUB- NET ("SN - ID")
EXAMINE ITS
TRAFFIC MATRIX

84 — ADD UP TFAFFIC FROM
SELECTED STATION
STORE TO 'SUM'

85 — "SUM" > "CC - SUM" ? — NO

86 — "CC - SUM" ← "SUM"
"CC-ID" ← "SN-ID"

87 — ALL
SUB - NETWORK
TRAFFIC MATCHES
EXAMINED ? — NO

YES

88 — FOR SUB-NET "CC-ID"
SET S-POINTER
OR LAST NEXT-S
POINTER TO POINT TO
STATION "S-ID"

FIG 9

89 — ALL
STATIONS
EXAMINED ? — NO

YES

90 — RETURN

**FIG 10A**

**FIG 10B**

FIG 11

START

92 — SET 'Y' TO FIRST / NEXT SUB-NETWORK IN SUB-NET. LIST

"TESTS FOR BRIDGES" ROUTINE

93 — SET 'X' TO FIRST / NEXT SUB-NETWORK IN SUB-NET LIST (X ≠ Y)

**FIG 12**

94 — FIRST TEST FOR BRIDGE SUB - ROUTINE

95 — BRIDGE FOUND ? — YES

NO

96 — SECOND TEST FOR BRIDGE SUB - ROUTINE

97 — BRIDGE FOUND ? — YES

NO

98 — THIRD TEST FOR BRIDGE SUB - ROUTINE

99 — ALL SUB - NETS ( EXCEPT Y ) USED FOR X ? — NO

YES

100 — ALL SUB - NETWORKS USED FOR Y ? — NO

YES

RETURN

START

USING TRAFFIC MATRIX
FOR SUB - NETWORK X , SUM
ALL TRAFFIC SOURCING
FROM SUB - NETWORK Y
—
STORE TO $[T_1]_X$

— 102

FOR FIRST / NEXT
TRAFFIC MATRIX OF THE
SUB - NETWORK GROUP R
SUM ALL TRAFFIC SOURCING
FROM SUB - NETWORK Y
—
ADD INTO $[T_1]_R$

— 103

ALL
SUB - NETWORKS OF
GROUP R
CONSIDERED
?

— 104

NO

'FIRST TEST FOR
BRIDGE'
SUB - ROUTINE

YES

$[T_1]_X > [T_1]_R$
?

— 105

NO

**FIG 13**

ADD NEW ENTRY
INTO BRIDGE LIST
FOR Y TO X

106 —

RETURN